Europäisches Patentamt

European Patent Office

Office européen des brevets

(19)

(11) Numéro de publication : **0 658 961 A1**

## (12) DEMANDE DE BREVET EUROPEEN

(21) Numéro de dépôt : **94420357.9**

(22) Date de dépôt : **13.12.94**

(51) Int. Cl.⁶ : **H01R 39/54, H02K 11/00, H02K 13/10, H01R 39/36**

(30) Priorité : **14.12.93 FR 9315328**

(43) Date de publication de la demande :
**21.06.95 Bulletin 95/25**

(84) Etats contractants désignés :
**AT DE ES GB IT**

(71) Demandeur : **Le Carbone-Lorraine S.A.
Tour Manhattan
5-6 Place de l'Iris
La Défense 2
F-92400 Courbevoie (FR)**

(72) Inventeur : **Marsolais, Richard
23 Lotissement les Primevères
F-38500 Saint-Nicolas de Macherin (FR)**
Inventeur : **Kammerer, Eric
4, Rue d'Arles
F-80090 Amiens (FR)**
Inventeur : **Carrouaille, Michel
300, Chemin de la Cavée
F-80650 Vignacourt (FR)**
Inventeur : **Joly, Emmanuel
6, rue Barreau
F-92600 Asnieres (FR)**
Inventeur : **Chatelain, Jean-Jacques
8, Allée des Cèdres
F-78200 Magnanville (FR)**

(74) Mandataire : **Mougeot, Jean-Claude et al
PECHINEY
28, rue de Bonnel
F-69433 Lyon Cedex 03 (FR)**

(54) **Ensemble balai et porte-balai pour moteur électrique à fonction antiparasitage incorporée et procédé de fabrication.**

(57)   L'ensemble balai et porte-balai (10) pour moteur électrique, ledit balai (1) comprenant, a) une pièce d'usure (2), b) un ressort (7), c) des moyens d'antiparasitage comprenant des spires conductrices électrique entourant un noyau (6) en matériau de perméabilité relative élevée, est caractérisé en ce que,

1) ledit noyau (6) et lesdites spires forment, grâce à des moyens de liaison, un bloc rigide (4),

2) ledit bloc rigide (4) est solidaire mécaniquement avec ladite pièce d'usure (2),

3) ledit porte-balai (11) comprend des moyens pour éviter le court-circuit entre ladite pièce d'usure (2) et ledit ressort (7).

Procédé de fabrication par assemblage.

FIG.1

EP 0 658 961 A1

DOMAINE DE L'INVENTION

L'invention concerne le domaine des équipements électriques, en particulier les moteurs électriques munis de commutateurs et de balais permettant le passage du courant électrique entre une partie fixe (stator) et une partie mobile, généralement tournante (rotor).

Plus précisément, l'invention décrit un ensemble balai et porte-balai, pour moteur électrique, à fonction antiparasitage incorporée, et son procédé de fabrication.

ART ANTERIEUR

Le problème de l'antiparasitage des moteurs électriques est bien connu. On sait que le fonctionnement d'un moteur électrique provoque, de manière aléatoire, des émissions parasites dans le domaine des fréquences de communication (fréquences radio par exemple), qui viennent donc brouiller les radiofréquences et ainsi la qualité de réception du signal.

Ces émissions parasites résultent de la succession de mise en contact / interruption du contact entre balai et collecteur.

Ainsi, les fabricants de moteurs électriques sont règlementairement tenus d'incorporer aux moteurs fabriqués des moyens d'antiparasitage.

Les moyens d'antiparasitage les plus couramment utilisés sont des filtres capacitifs ou inductifs incorporés aux circuits électriques.

Ils présentent deux inconvénients majeurs :

d'une part, ils sont onéreux par le coût propre des composants et par le coût de montage, généralement manuel, d'autre part, ils prennent de la place, ce qui va à l'encontre de la miniaturisation, très recherchée, des équipements électriques.

C'est la raison pour laquelle on a déjà mis au point des balais à fonction antiparasitage intégrée.

Ainsi, la demande de brevet FR 2 401 541-A1 décrit un moteur universel muni de balais pouvant glisser à l'intérieur d'un porte-balai et s'appliquant contre le collecteur grâce à un ressort hélicoïdal. Ce ressort, qui fait partie du circuit électrique et entoure un noyau de ferrite, joue le rôle de bobine de déparasitage.

De même, la demande de brevet FR 2 504 742-A1 décrit un porte-balai en charbon auquel est incorporée une bobine d'antiparasitage constituée par un noyau de ferrite au sein duquel circule le cordon de raccordement.

PROBLEME POSE

Les solutions de l'art antérieur ne résolvent que partiellement l'ensemble des problèmes posés, qui sont au nombre de quatre :

a) problème de la qualité de l'antiparasitage,

b) problème du coût de la fonction antiparasitage,

c) problème de la compacité des moyens d'antiparasitage,

d) problème de maintenance et de remplacement du balai.

En effet, les moyens décrits dans la demande FR 2 401 541-A1 n'assurent pas un niveau constant d'antiparasitage puisque le ressort de poussée du balai, qui se détend au fur et à mesure que s'use le balai, sert aussi de bobine d'antiparasitage. Par ailleurs, dans cette configuration, il faut un noyau de ferrite relativement long pour avoir également un effet d'antiparasitage même lorsque le ressort est détendu, d'où un encombrement relatif du dispositif d'antiparasitage assez élevé. On peut noter aussi que ce dispositif nécessite un assemblage de trois pièces distinctes (le balai muni de son ressort, le noyau de ferrite et le porte-balai), ce qui n'est pas favorable à la productivité.

De même, les moyens décrits dans le FR 2 504 742-A1 comportent une bobine d'antiparasitage logée dans l'espace qui est entouré par le ressort de pression, bobine percée de trous axiaux dans lesquels est enfilé le cordon de raccordement. Ces moyens semblent d'une part onéreux à mettre en oeuvre (l'enfilement du cordon dans des trous axiaux, le montage de l'ensemble "balai + bobine" non rigide dans le porte-balai sont peu faciles à automatiser, nécessité de "fixer" le noyau de ferrite au porte-balai en soudant l'extrémité du cordon à la sortie électrique du porte-balai), et d'autre part d'efficacité limitée à cause du nombre réduit de spires de cordon axiales dans le noyau de ferrite.

OBJETS DE L'INVENTION

Un objet de l'invention est la mise au point d'un ensemble balai et porte-balai dont chaque élément de cet ensemble participe, grâce à des moyens spécifiques, à l'obtention du niveau d'antiparasitage souhaité.

Les moyens relatifs au balai comprennent un balai compact (monobloc) à fonction antiparasitage intégrée, substituable aux balais "standards".

Un autre objet de l'invention est un procédé de fabrication automatisable de balais à fonction antiparasitage intégrée.

Un autre objet de l'invention est un ensemble économique balai et porte-balai utilisant des porte-balais modifiés et des balais "standards".

## DESCRIPTION GENERALE DE L'INVENTION

Selon un premier objet de l'invention, l'ensemble balai et porte-balai pour moteur électrique muni d'un collecteur, ledit balai comprenant, a) une pièce d'usure conductrice électrique, b) un ressort conducteur électrique servant à établir le contact électrique entre ladite pièce d'usure et une sortie électrique dudit porte-balai, et à appliquer ladite pièce d'usure contre ledit collecteur en la faisant glisser dans le porte-balai, c) des moyens d'antiparasitage comprenant des spires conductrices électrique entourant un noyau en matériau de perméabilité magnétique élevée, est caractérisé en ce que,

1) ledit noyau et lesdites spires conductrices forment, grâce à des moyens de liaison, un bloc rigide, lesdites spires conductrices étant rapprochées sans contact électrique entre elles,

2) ledit bloc rigide est, grâce à des moyens d'assemblage, solidaire mécaniquement avec ladite pièce d'usure et relié électriquement, d'une part avec ledit ressort, et d'autre part avec ladite pièce d'usure, l'ensemble dudit bloc rigide et de ladite pièce d'usure constituant un bloc composite rigide apte à glisser dans ledit porte-balai sous l'action dudit ressort.

3) ledit porte-balai comprend des moyens pour éviter le court-circuit entre ladite pièce d'usure et ledit ressort.

Tous ces moyens permettent de réduire le niveau des parasites électromagnétiques transmis au circuit d'alimentation électrique ou rayonnés, et de diminuer le coût global d'antiparasitage grâce à l'élimination partielle ou totale des composants d'antiparasitage périphériques largement utilisés sur les moteurs commercialisés.

L'invention constitue à la fois une solution techniquement efficace pour atténuer les parasites électromagnétiques et surtout une solution permanente au cours de la durée de vie du balai. En effet, les moyens de l'invention sont peu ou pas dépendants du degré d'usure du balai et de l'allongement correspondant du ressort.

Par ailleurs, les moyens selon l'invention, comme ceux déjà utilisés en pratique dans l'art antérieur, ne perturbent pas le fonctionnement normal du moteur électrique.

## DESCRIPTION DES FIGURES

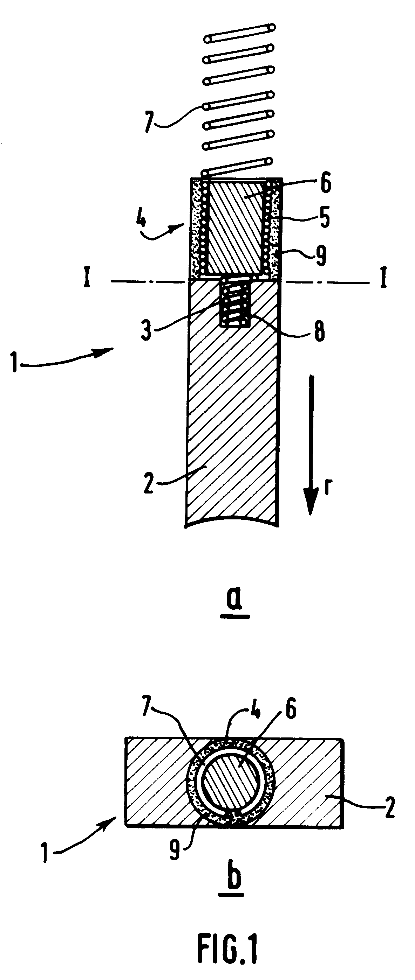

La figure 1a représente en coupe longitudinale (direction "r") un balai (1) selon l'invention comprenant un pièce d'usure (2) munie d'un trou borgne (3), un conducteur électrique comprenant, en série, un ressort conducteur électrique (7), des spires conductrices rapprochées (5) entourant un noyau (6) en matériau de perméabilité magnétique élevée, et des spires jointives (8) fixées, typiquement par vissage, dans le trou borgne (3), et assurant la liaison mécanique et électrique dudit bloc rigide (4) et de ladite pièce d'usure (2). Les moyens de liaison dudit bloc rigide (4) sont constitués par un manchon isolant (9) immobilisant les spires (5) par rapport au noyau (6) tout en les maintenant rapprochées.

La figure 1b est une vue de dessus du balai de la figure 1a, qui montre la position dudit bloc rigide (4) par rapport à ladite pièce d'usure (2), ainsi que sa forme cylindrique alors que ladite pièce d'usure (2) est parallélépipédique.

Les figures 2a à 2d représentent, en coupe longitudinale, différents types de blocs rigides (4) selon la nature du moyen de liaison (9) ou la géométrie du noyau (6) :

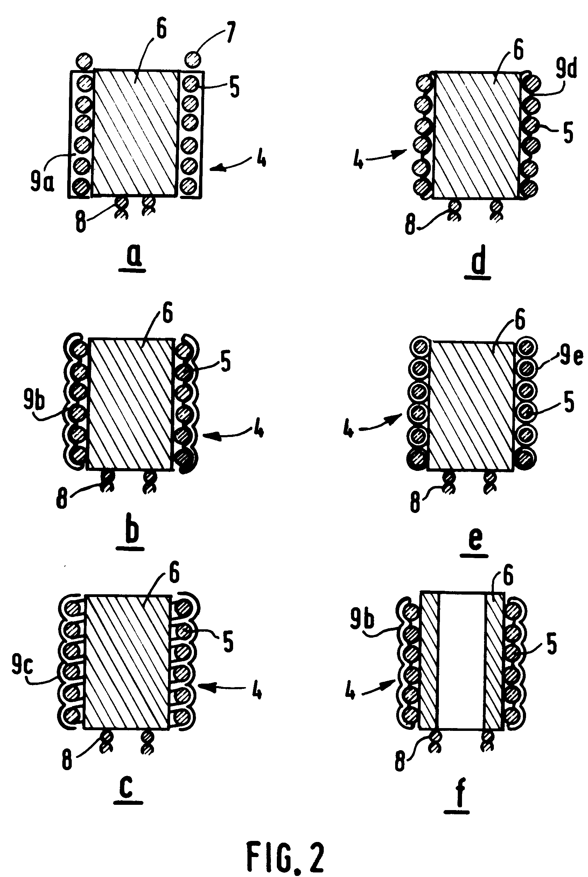

Sur la figure 2a, le moyen de liaison (9) est constitué par un manchon (9a) en matière plastique, qui peut être obtenu par injection.

La figure 2b représente un moyen de liaison (9) constitué par un film plastique (9b), qui peut être thermorétratable.

La figure 2c représente un moyen de liaison constitué par un vernis (9c).

La figure 2d représente un moyen de liaison (9) constitué par un filetage (9d) à la surface du noyau (6) coopérant avec les spires conductrices rapprochées (5).

La figure 2e représente un cas analogue à la figure 2d mais dans lequel le conducteur électrique formant les spires conductrices rapprochées est recouvert d'une couche de vernis isolant (9e), ce qui permet un contact physique entre spires, mais sans contact électrique.

La figure 2f représente le cas d'un noyau (6) en forme de couronne cylindrique, le moyen de liaison entre spires rapprochées (5) et noyau (6) étant un film (9b).

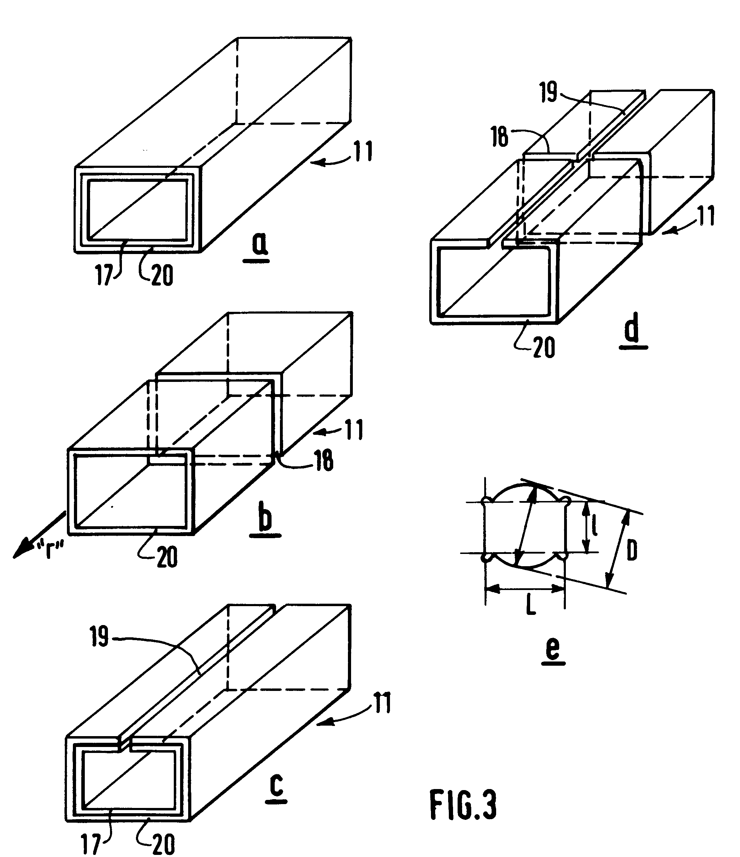

Les figures 3a à 3d représentent des vues schématiques en perspective de porte-balais (11) selon l'invention :

La figure 3a représente un porte-balai (11) constitué par une armature métallique (20) recouverte intérieurement d'une couche (17) de vernis isolant.

La figure 3b représente un porte-balai (11) constitué par une armature métallique (20) divisée en deux parties isolées électriquement l'une par rapport à l'autre, par un espace formant une coupure transversale (18) perpendiculaire à la direction "r".

La figure 3c représente un porte-balai (11), analogue à celui de la figure 3a, mais doté d'une ouverture longitudinale (19) parallèle à la direction "r".

La figure 3d représente un porte-balai, analogue à celui de la figure 3b, mais doté en plus d'une ouverture longitudinale (19), comme dans la figure 3c.

La figure 3e représente une coupe transversale du porte-balai utilisé pour les essais comparatifs.

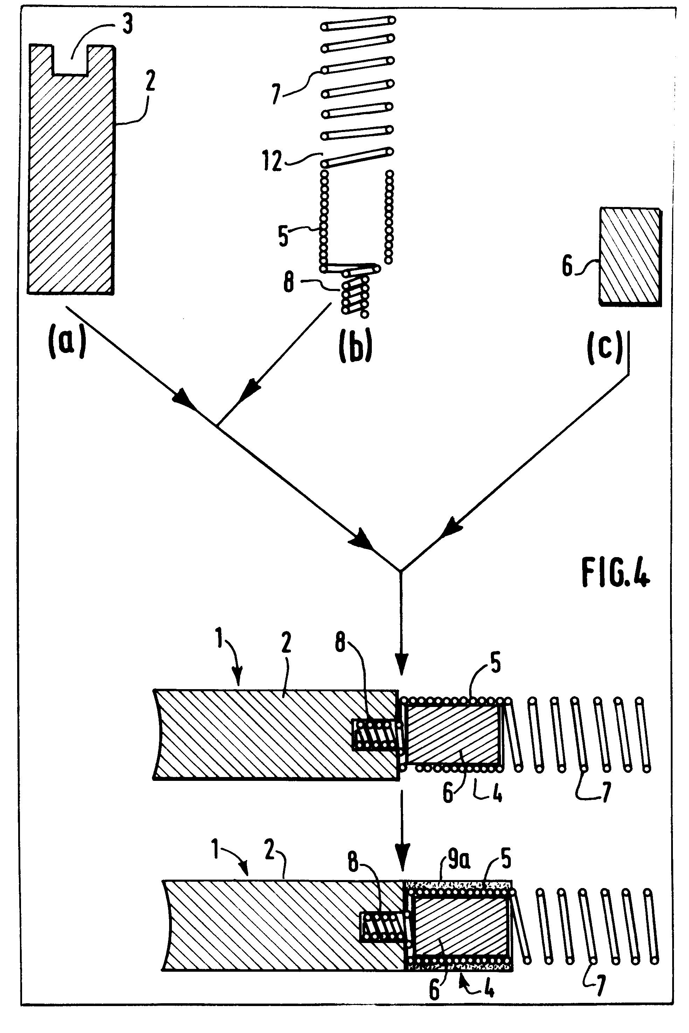

La figure 4 schématise un mode de fabrication du balai (1) selon l'invention qui comprend typiquement :

A - la fabrication ou l'approvisionnement des 3 éléments constituant le balai (1) :

  a) la pièce d'usure (2) munie d'un trou borgne (3),
  b) le conducteur électrique (12) comprenant les spires formant ressort (7), lesdites spires rapprochées (5) et les spires (8) destinées à être introduites dans le trou borgne (3) de la pièce d'usure (2),
  c) le noyau (6) en matériau de perméabilité magnétique élevée,

B - l'assemblage de ces 3 éléments, et l'application d'un moyen de liaison (9) des spires rapprochées (5) et du noyau (6), moyen représenté sur la figure 4, par un manchon en matière plastique (9a).

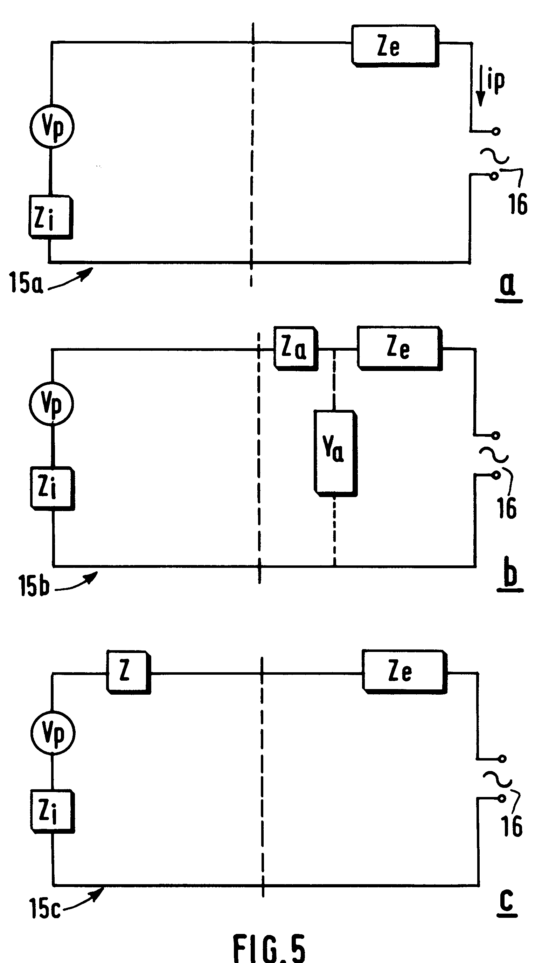

Les figures 5a à 5c représentent, sous une forme simplifiée, les éléments du circuit équivalent du moteur qui comprend toujours, comme représenté à la figure 5a :

  * une source de parasites électromagnétiques au niveau du contact balai/collecteur (symbolisée par Vp), qui engendre un courant parasite $i_p$,
  * une impédance globale interne Zi pour le moteur et qui intègre l'impédance de la source de parasites,
  * une impédance globale externe Ze pour le circuit d'alimentation du moteur.

Le trait vertical en pointillés constitue une séparation entre les éléments, à gauche de la figure, constituant le "coeur" du moteur et formant le "circuit intérieur" (induit /inducteur/ balais), et ceux, à droite de la figure constituant la partie extérieure au "coeur" du moteur (alimentation...) et formant le "circuit extérieur" du moteur.

La figure 5b représente la solution utilisée en pratique sur les moteurs commercialisés : ajout dans le "circuit extérieur" d'impédances (généralement des selfs) et/ou d'admittances (généralement des capacités), sous forme de composants passifs externes.

La figure 5c représente la solution selon l'invention qui consiste à intégrer à la partie interne du moteur (dans le "circuit intérieur"), au niveau de l'ensemble balai et porte-balai, une impédance z adaptée en fonction de Zi et Ze.

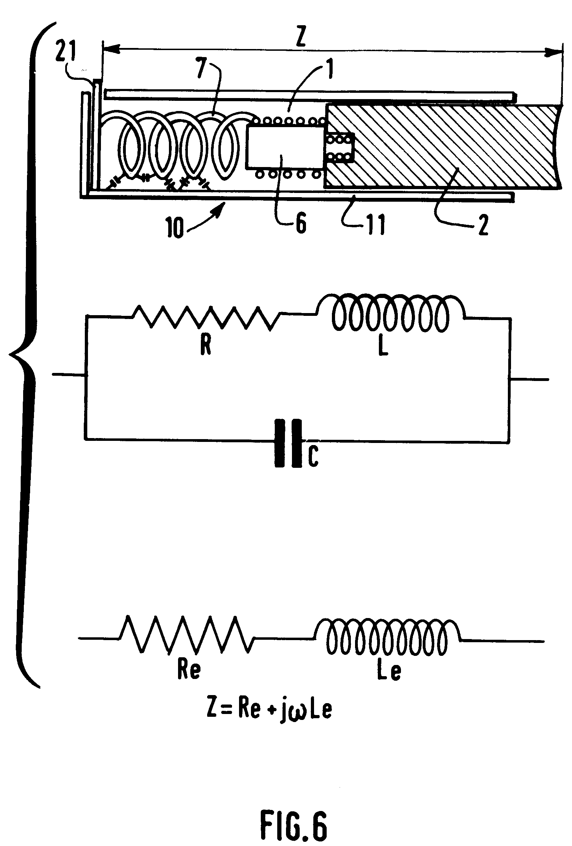

La figure 6 représente un ensemble (10) balai (1) et porte-balai (11) selon l'invention, accompagné de ses circuits équivalents R,L,C et Re,Le.

On a représenté symboliquement la formation de capacités entre spires du ressort conducteur (7), et entre spires du ressort (7) et porte-balai (11).

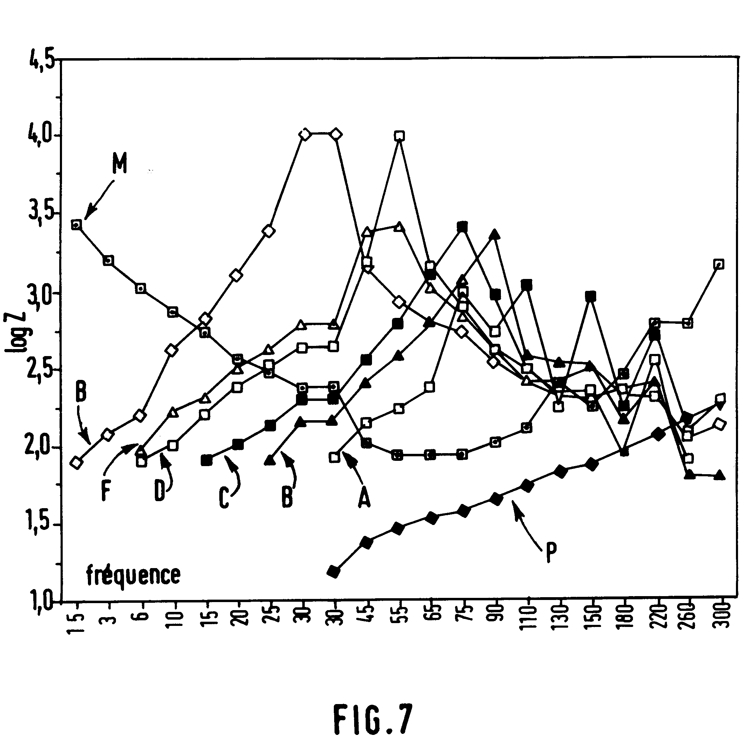

La figure 7 représente les courbes d'impédance Z (log Z en ordonnée - Z en ohm) en fonction de la fréquence (en MHz) en abscisse, pour :

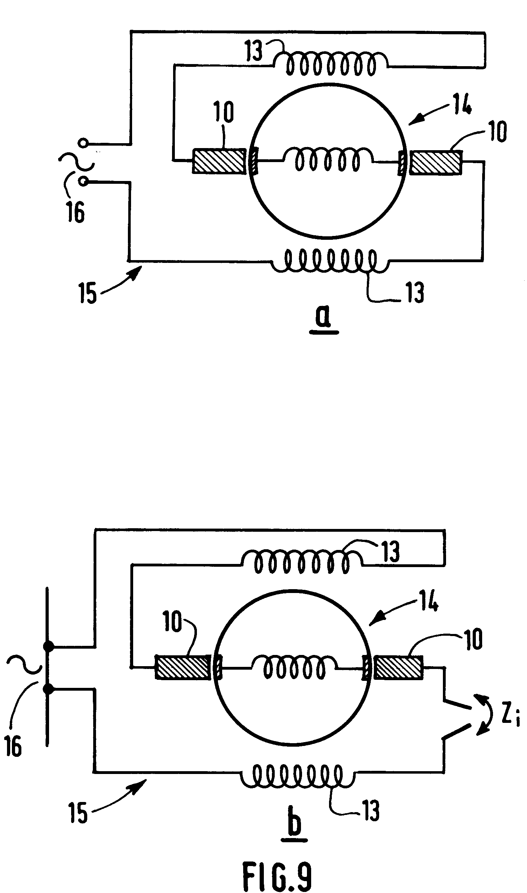

  * un ensemble balai et porte-balai de l'art antérieur. Courbe notée P.
  * le moteur (voir à la figure 9a à 9c la mesure de l'impédance du moteur). Courbe notée M.
  * 6 ensembles balai et porte-balai selon l'invention (courbes A, B, C, D, E et F).

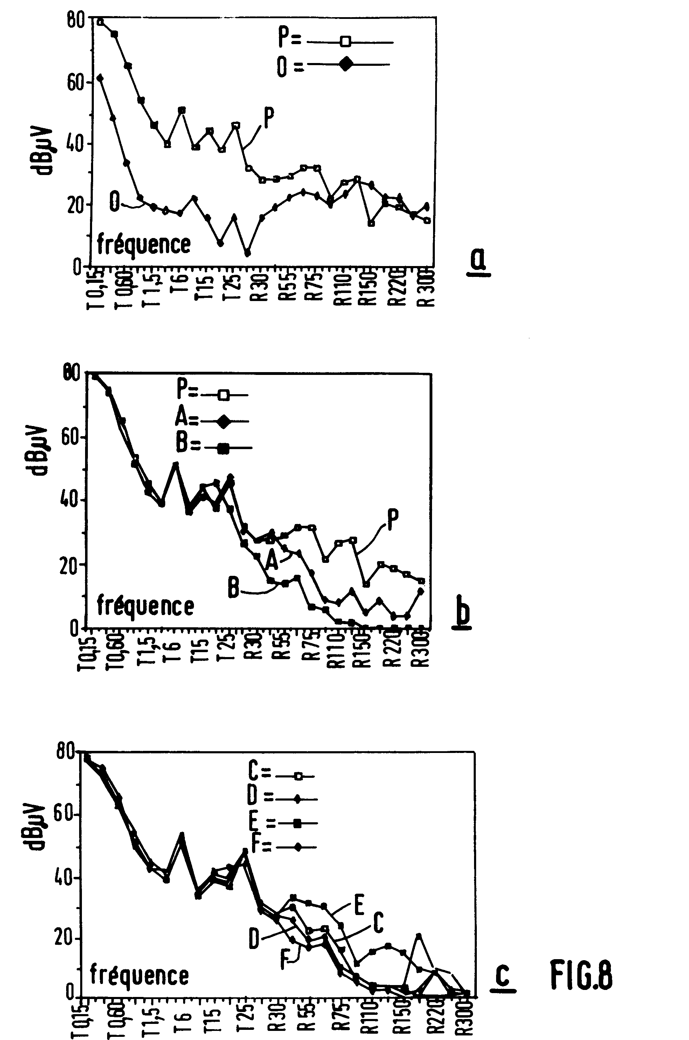

Les figures 8a à 8c représentent les courbes de mesures des perturbations radio-électriques correspondant à des essais d'ensembles balai et porte-balais réalisés sur moteur d'aspirateur 1200 W. Les mesures ont été effectuées selon la norme française NF-C 91-014.

En ordonnée, figure l'atténuation en dB ($\mu$V) et en abscisse la fréquence (notée T quand la mesure est effectuée sur les perturbations transmises - à fréquence < 30 MHz / notée R quand la mesure est effectuée sur perturbations rayonnées - à fréquence > 30 MHz, conformément à la norme de mesure précitée).

Le tableau qui suit donne, pour chaque essai, la signification des lettres relatives aux courbes des figures 8a à 8c :

| Lettre | Figure | Moyen d'antiparasitage |
|--------|--------|------------------------|
| O | 8a | composants passifs externes (art antérieur) |
| P | 8a, 8b | ensemble balai et porte-balai de l'art antérieur (sans antiparasitage) |
| A | 8b | porte-balai isolant balai standard |
| B | 8b | porte-balai isolant balai avec bloc d'antiparasitage (BdA) |
| C | 8c | porte-balai métallique coupé transversalement / balai standard |
| D | 8c | porte-balai métallique coupé transversalement / balai avec BdA |
| E | 8c | porte-balai métallique coupé transversalement et ouvert longitudinalement balai standard |
| F | 8c | porte-balai métallique coupé transversalement et ouvert longitudinalement balai avec BdA |

Les figures 9a à 9b représentent, de manière à illustrer la mesure de l'impédance $Z_i+Z_e$ du moteur, des schémas de moteur (15) sur lesquels figurent l'alimentation (16), l'induit (14) et deux ensembles balai et porte-balai (10), l'inducteur (14). A noter que, dans la pratique, $Z_i$ intègre des effets parasites et que, compte tenu de la méthode de mesure choisie dans l'invention et représentée à la figure 9b, $Z_e$ est négligeable par rapport à $Z_i$.

La figure 9a est le schéma simplifié du circuit du moteur (moteur universel muni de deux ensembles (10) balai et porte-balai).

La figure 9b représente la configuration de mesure de l'impédance $Z_i+Z_e$ du moteur pour un ensemble (10) balai et porte-balai.

DESCRIPTION DETAILLEE DE L'INVENTION

Selon une mode de réalisation préféré du premier objet de l'invention, ledit ressort conducteur électrique (7), lesdites spires conductrices (5) et lesdits moyens d'assemblage forment un même conducteur électrique spiralé (12) constitué de trois parties ayant chacune sa fonction propre (respectivement dans l'ordre : spires (7) à fonction "ressort", spires rapprochées (5) à fonction "antiparasitage", et spires jointives (8) à fonction d'"assemblage"), en plus de la fonction commune de conduction électrique. Lesdits moyens d'assemblage sont constitués par des spires (8), de préférence jointives, formant un élément mâle fixable, de préférence par vissage, à un élément femelle, de préférence un trou borgne (3), de ladite pièce d'usure (2).

Comme cela sera indiqué ensuite, ce type d'assemblage est pariculièrement économique car facilement automatisable.

On pourrait aussi, selon l'invention, assembler ledit bloc rigide d'antiparasitage (4) à la pièce d'usure (2) en assemblant ledit noyau (6) à ladite pièce d'usure (2), par exemple par collage, mais ce n'est pas là une réalisation préférée selon l'invention.

Selon l'invention, il importe que, grâce aux dits moyens de liaison, lesdites spires rapprochées (5) soient d'une part le plus rapprochées possible sans qu'il y ait de contact électrique entre elles, et qu'elles soient d'autre part fixes par rapport audit noyau (6).

De préférence, lesdits moyens de liaison rigidifiant l'ensemble constitué par ledit noyau (6) et lesdites spires rapprochées (5) sont constitués par un revêtement (9) de matière plastique isolante.

Ce revêtement (9) est de préférence choisi parmi un manchon plastique (9a), un film plastique (9b) de préférence thermorétractable, une couche de vernis (9c). D'un point de vue pratique, l'application d'une couche de vernis (9c) est préférée.

Il est également possible selon l'invention d'obtenir lesdits moyens de liaison au moyen d'un noyau (6) fileté sur sa surface cylindrique, dont le filetage coopère avec lesdites spires rapprochées (5), le filetage à la surface extérieure dudit noyau permettant de solidariser en position fixe lesdites spires rapprochées (5) avec ledit noyau (6).

Selon l'invention, ledit matériau de perméabilité magnétique élevée formant le noyau (6) est choisi parmi les ferrites doux, l'acier, un matériau composite comprenant soit des ferrites doux, soit de l'acier, soit des ferrites doux et de l'acier, ayant une perméabilité relative supérieure à 10, de manière à élargir la plage de fréquence efficace desdits moyens d'antiparasitage. On peut citer comme ferrite préférés le ferrite doux Ni-Zn, le ferrite doux Mn-Zn isolé électriquement en surface ou traité par imprégnation.

Il est essentiel selon l'invention d'éviter le court-circuit entre ladite pièce d'usure (2) et ledit ressort (7). Dans ce but, ledit porte-balai (11) peut être en matériau isolant électrique, de préférence en polymère thermoplastique ou thermodurcissable, ou en métal revêtu sur tout ou partie de sa surface intérieure d'un revêtement isolant.

Dans ce même but, de manière à éviter le court-circuit entre ladite pièce d'usure (2) et ledit ressort (7), ledit porte-balai (11) peut être en métal, mais coupé transversalement (coupure 18) de sorte que la partie du porte-balai dans laquelle glisse la pièce d'usure (2) soit isolée électriquement de l'autre partie du porte-balai dans laquelle se trouve ledit ressort (7).

La demanderesse a essayé d'analyser, sur le plan électrique, les incidences des moyens mis en oeuvre selon l'invention. Pour cela, elle a mesuré systématiquement, en fonction de la fréquence (avec un impédancemètre), les impédances des ensembles balai et porte-balai (10) testés ainsi que l'impédance du moteur lui-même.

En ce qui concerne l'impédance Z des ensembles balais et porte-balais (10), elle est équivalente à celle d'un circuit R, L, C et elle comprend un terme réel (Re) et un terme imaginaire (Le). Voir figure 6.

L'impédance du moteur peut être mesurée par la méthode indiquée aux figures 9a à 9b, en shuntant les bornes de l'alimentation (16) et en ouvrant le circuit au niveau de l'ensemble balai et porte-balai (10).

La demanderesse a trouvé que cette méthode de mesure constituait une mesure électrique pertinente relative à un moteur donné, c'est à dire un critère pour choisir l'impédance d'un ensemble balai et porte-balai adaptée à un moteur donné, en vue d'obtenir un effet d'antiparasitage.

Les résultats de ces mesures sont réunis sur la figure 7. Seuls les ensembles notés B, D et F comprennent l'ensemble des moyens constituant le premier objet de l'invention.

Ces résultats appellent les commentaires suivants :

* d'une part, il importe de noter la position relative de la courbe d'impédance du moteur (courbe M) et les courbes d'impédance des différents ensembles de balai et porte-balais testés (A, B, C, D, E, F et P) : l'impédance de l'ensemble P est toujours inférieure à l'impédance M du moteur, alors que l'impédance des ensembles A à F selon l'invention est, dans un large domaine de fréquences, supérieure à l'impédance M du moteur.

* d'autre part, il faut noter la forme des courbes des ensembles A à F qui présentent un phénomène de résonance (maximum pour une plage de fréquence relativement étroite, dite de résonance).

* enfin, il est intéressant de noter que les moyens de l'invention permettent de faire varier la position, en fréquence, de la plage de fréquence de résonance.

Quand, à la suite des mesures d'atténuation des parasites électromagnétiques effectuées par la demanderesse sur ces mêmes ensembles de balai et porte-balai (10) (voir figures 8a à 8c), elle a pu constater une certaine corrélation entre la performance mesurée (pouvoir d'atténuation des parasites électromagnétiques) et l'impédance Z de ces ensembles (10). Il importe d'avoir Z élevée, typiquement supérieure à 100 ohm, et plus particulièrement, d'avoir un écart d'impédance entre celle de l'ensemble balai et porte-balai (Z) et celle du moteur (Zi+Ze) : plus un ensemble balai et porte-balai (10) présente un écart Z-(Zi+Ze) important dans un domaine de fréquence donné, et plus cet ensemble est efficace pour atténuer les parasites électromagnétiques dans ce domaine de fréquence.

La demanderesse en a conclu que, pour résoudre le problème posé, il importe que l'impédance Z de l'ensemble balai et porte-balai (10) soit adaptée par modification des caractéristiques équivalentes R,L,C du balai et/ou du porte-balai de manière à obtenir une valeur de Z élevée, supérieure à l'impédance (Zi+Ze) du moteur dans la plage de fréquence où un effet d'antiparasitage important est recherché.

De préférence, l'adaptation d'impédance Z est obtenue par modification des caractéristiques équivalentes Rb, Lb, Cb dudit bloc rigide (4), typiquement par choix adapté dudit matériau de perméabilité relative élevée formant ledit noyau (6), et/ou de l'inductance des dites spires rapprochées (5), de manière à ce que la fréquence de résonance de l'impédance Z de l'ensemble (10) balai et porte-balai se situe dans le domaine de fréquence où un effet d'antiparasitage important est recherché.

Dans le cas d'un porte-balai métallique, on peut aussi adapter l'impédance Z en ouvrant le porte-balai dans le sens longitudinal (fente (19) - voir figures 3c et 3d).

Il est avantageux que ledit conducteur électrique spiralé (12) soit un conducteur composite à âme métallique à caractéristiques mécaniques élevées recouverte d'une couche métallique à conductivité électrique élevée, de préférence en cuivre ou alliage de cuivre.

De préférence, ladite âme métallique est soit en acier, soit en acier inox, soit en alliage cuivre-béryllium.

Un deuxième objet de l'invention est constitué par un procédé de fabrication d'ensembles balai et porte-balai (10).

En effet, le problème posé ne consiste pas seulement à mettre au point un ensemble balai et porte-balai atténuant les parasites électromagnétiques, mais aussi à mettre au point un procédé pour fabriquer un tel ensemble dans des conditions économiques.

Selon l'invention, le procédé de fabrication d'un balai pour ensemble de balai et porte-balai selon l'invention comprend :

a) la fabrication d'une pièce d'usure (2) munie d'un trou borgne cylindrique (3),

b) la fabrication, à partir d'un conducteur électrique, d'une pièce conductrice spiralée (12) comprenant successivement des spires non jointives formant ressort (7), des spires rapprochées (5) sans contact électrique entre elles et à valeurs d'inductance L prédéterminée, et des spires jointives (8) à enveloppe cylindrique vissables à l'intérieur du trou borgne,

c) l'assemblage, par vissage, de ladite pièce d'usure (2) et de ladite pièce conductrice spiralée (12), et comprenant le placement, à un stade quelconque du procédé, d'un noyau (6) en matériau de perméabilité élevée à l'intérieur desdites spires rapprochées (5) à valeur de L prédéterminée,

d) la liaison dudit noyau (6) et desdites spires rapprochées (5) par application d'un revêtement (9) de matière plastique isolante.

A l'étape c) du procédé, ledit placement est de préférence obtenu en introduisant à force un noyau (6) en matériau de perméabilité élevée à l'intérieur desdites spires rapprochées (5).

A l'étape d) du procédé, ledit revêtement (9) de matière plastique isolante est, de préférence, une couche de vernis (9c) stable thermiquement (au moins jusqu'à 150°C).

Ce procédé présente le grand avantage d'être totalement automatisable, qu'il s'agisse de la fabrication / de l'approvisionnement en éléments, ou de l'assemblage des éléments, y compris la liaison entre spires rapprochées et noyau. Il conduit donc à des coûts de production relativement faibles.

Les travaux de la demanderesse ont porté sur des ensembles balai et porte-balai très divers, certains de ces ensembles comprenant des moyens d'antiparasitage à la fois au niveau du balai et du porte-balai (ensembles référencés B, D et F), alors que d'autres ensembles (référencés A, C et E), qui étaient des ensembles "témoins" pour les ensembles référencés B, D et F, se sont trouvés avoir, de manière surprenante, un effet antiparasitage.

Ce type d'ensembles référencés A, C et E constitue le troisième objet de l'invention.

Ce type d'ensemble balai et porte-balai pour moteur électrique muni d'un collecteur, ledit balai comprend, a) une pièce d'usure conductrice électrique, b) un ressort conducteur électrique servant à établir le contact électrique entre ladite pièce d'usure et une sortie électrique dudit porte-balai, et à appliquer ladite pièce d'usure contre ledit collecteur en la faisant glisser dans ledit porte-balai, et est caractérisé en ce que, ledit porte-balai comprend des moyens pour éviter le court-circuit entre ladite pièce d'usure et ledit ressort.

Ces moyens, pour éviter le court-circuit, sont choisis parmi : utilisation d'un porte-balai en matériau isolant, utilisation d'un porte-balai métallique (20) recouvert intérieurement d'une couche isolante (17) - voir figure 3a, utilisation d'un porte-balai métallique coupé transversalement par un espace (18) (voir figures 3b et 3d) de sorte que la partie du porte-balai dans laquelle glisse la pièce d'usure (2) soit isolée électriquement de l'autre partie du porte-balai dans laquelle se trouve ledit ressort (7).

On peut aussi avantageusement ouvrir ledit porte-balai métallique dans le sens longitudinal (direction "r"), comme représenté par la fente (19) aux figures 3c et 3d.

Bien que les ensembles référencés B, D et F soient plus performants techniquement (additivité des effets antiparasitage dûs au bloc rigide (4) du balai et dûs au porte-balai) que les ensembles référencés A, C et E, ces derniers, moins chers que les précédents, présentent un rapport qualité/prix sensiblement voisin, et donc un intérêt pratique comparable.

EXEMPLES

Tous les essais et travaux comparatifs de la demanderesse ont été réalisés à l'aide de balais et porte-balais de même dimensions testés sur un même moteur (moteur d'aspirateur 1200 W du commerce).

**A) Balais :**

- Les pièces d'usure (2) (référence A101/31 LE CARBONE LORRAINE) ont été choisies en qualité standard pour aspirateur 1200W du commerce, et ont pour dimensions : 18 mm (hauteur), section de 9x6 mmxmm.
  Ces pièces d'usure ont été munies d'un trou borgne (3) de 3,1 mm de diamètre et de 3,8 mm de hauteur.
- Le ressort conducteur (12) a été obtenu à partir d'un fil métallique, de diamètre de 0,55 mm, constitué d'une âme acier revêtue de cuivre.
  Le diamètre extérieur des spires est de 8,5 mm pour le ressort conducteur (7) pour tous les balais.
  Dans le cas de balais munis d'un bloc d'antiparasitage (4), on a fabriqué un ressort (12) ayant des spires de trois diamètres différents : outre le diamètre de 8,5 pour la partie ressort, le diamètre extérieur des spires est de 6 mm pour les spires conductrices rapprochées (5) (15 spires rapprochées sur 12 mm de hauteur) et de 3,1 mm pour les spires (8) de 3,8 mm de hauteur formant un élément mâle fixable dans le trou borgne (3).
- Le bloc d'antiparasitage (4) a été formé à partir d'un ferrite Ni-Zn (référence 4B1 de PHILIPS).
  Des essais satisfaisants ont aussi été réalisés avec un ferrite doux Mn-Zn isolé électriquement en surface.
  Le noyau de ferrite (6) a un diamètre égal à 5 mm (= diamètre intérieur des spires rapprochées (5)), et une hauteur égale à 15 mm.
  Sur ce ferrite, et après assemblage, 15 spires rapprochées (5) sont enroulées sur une hauteur de 12 mm. Il a été trouvé préférable que le ferrite dépasse sensiblement du tore formé par l'enroulement de spires rapprochées (5).
  De nombreux essais ont montré la possibilité de modifier les caractéristiques du circuit R,L,C équivalent du bloc d'antiparasitage, en jouant typiquement sur la nature du ferrite, sur le nombre de spires rapprochées (5).

Comme moyen de liaison, on a utilisé un vernis électrique standard et on a ainsi formé une couche de vernis (9c) qui a, à la fois, rigidifié l'ensemble des spires rapprochées (5) et le noyau (6), et isolé les spires (5) les unes des autres.

Ainsi, en vue des essais comparatifs, on a fabriqué 2 types de balais : balais standard et balais avec bloc d'antiparasitage comme décrit précédemment.

**B) Porte-balais**

Les porte-balais sont tous de dimension standard correspondant au moteur de l'aspirateur 1200W.
Les essais ont été réalisés à l'aide des porte-balais suivants, de profil intérieur (section transversale) comme illustré à la figure 3e :
a) porte-balai métallique standard
b) porte-balai en matière plastique (résine thermodurcissable chargée de fibres)
c) porte-balai métallique coupé transversalement (figure 3b)
d) porte-balai métallique coupé transversalement et ouvert longitudinalement (figure 3d).
Dimensions des porte-balais :
Les porte-balais ont les dimensions intérieures telles que L soit égal à 9 mm, 1 égal à 6 mm, D égal à 9 mm et la "hauteur" du porte-balai est de 40 mm.
Ces porte-balai ont une sortie électrique (21).

**C) Ensembles balai et porte-balais**

Les ensembles suivants ont été testés comparativement. Les références des essais sont les suivantes :

| PORTE-BALAI | BALAI | |
|---|---|---|
| | Standard | Avec bloc d'antiparasitage |
| a) métallique standard | P | N |
| b) plastique | A | B |
| c) métallique coupé (fig.3b) | C | D |
| d) métallique coupé + ouvert (fig. 3d) | E | F |

### D) Mesures des impédances des ensembles balai et porte-balai

Les méthodes de mesures sont bien connues de l'homme du métier. Voir par exemple "Techniques de l'ingénieur" (Editions Techniques - PARIS), référence R1135 ("Mesures en radiofréquences / Méthodes de mesure et appareillage"), et référence R 1078 ("Mesures électriques / Mesures des composants électroniques").

La figure 7 réunit toutes les mesures d'impédance, sauf la courbe de l'essai N, qui est voisine de la courbe de l'essai P.

Par ailleurs, est représentée sur la figure 7 la courbe d'impédance du moteur (courbe M) mesurée selon la méthode de l'invention représentée à la figure 9b.

On observe d'une part que les ensembles balai et porte-balais selon l'invention présentent une impédance supérieure à 100 ohm sur la majeure partie du domaine des fréquences, contrairement à l'ensemble balai et porte-balai de l'art antérieur (référence P).

D'autre part, dans un large domaine de fréquences, l'impédance des ensembles balai et porte-balais selon l'invention est supérieure à celle du moteur.

### E) Mesure de l'atténuation des parasites électromagnétiques

Ces mesures ont été réalisées selon la norme française NF-C 91-014. A relativement basse fréquence (à 30 MHz et au-dessous), les mesures sont relatives à la transmission parasite, alors qu'à haute fréquence (à 30 MHz et au-desus), les mesures sont relatives au rayonnement parasite.

Les figures 8a à 8c reproduisent les résultats des essais A à F, et P, complétés par ceux de l'essai 0, relatifs à l'utilisation de composants d'antiparasitage selon l'art antérieur.

### F) Analyse des résultats

On constate que, dans le domaine des hautes fréquences (> 30 MHz), les moyens mis en oeuvre selon l'invention sont très efficaces.

On observe que les divers moyens pour interdire ou limiter la circulation de courants directs ou induits dans le porte-balai (matériau isolant / balai métallique coupé et/ou ouvert) conduisent par eux-mêmes à des effets d'atténuation importants totalement surprenants (essais A, C et E). Il est important de noter qu'il y a accumulation des effets d'atténuation quand les moyens relatifs au porte-balai se cumulent avec les moyens relatifs au balai (adjonction d'un bloc d'antiparasitage).

Ainsi, l'invention offre différents types de moyens permettant d'adapter l'ensemble balai et porte-balai aux exigences d'atténuation requises par les contraintes légales, et cela dans une large plage de fréquences en jouant sur la fréquence de résonance du bloc d'antiparasitage du balai, et/ou en jouant sur la nature du matériau ou la géométrie du porte-balai.

### AVANTAGES DE L'INVENTION

Grâce à l'invention, l'homme du métier dispose de moyens, variés par leur effet technique et leur coût relatif, pour résoudre le problème de l'antiparasitage d'un moteur donné.

En particulier, il a été surprenant de constater que des modifications simples de porte-balai selon l'invention avaient une effet d'antiparasitage prononcé, du moins aux fréquences élevées.

Il est également important de noter que la demanderesse est arrivé à définir des critères généraux portant sur l'impédance relative de l'ensemble balai et porte-balai par rapport à l'impédance du moteur. Ces critères peuvent guider l'homme du métier pour trouver les solutions les mieux adaptées pour réaliser l'antiparasitage

EP 0 658 961 A1

d'un moteur quelconque.

En définitive, l'invention permet de répondre à l'ensemble des problèmes posés, qu'il s'agisse du niveau de l'effet d'antiparasitage, en particulier dans le domaine des hautes fréquences, du coût global de la fonction "antiparasitage", de la compacité du balai selon l'invention ou enfin de la facilité d'utilisation du balai selon l'invention, puisqu'un objectif majeur de l'invention était de rendre le balai selon l'invention assimilable, sur le plan du montage, à un balai classique, mais sans avoir à installer en plus des composants passifs (selfs ou capacités).

**Revendications**

**1 -** Ensemble balai et porte-balai (10) pour moteur électrique muni d'un collecteur, ledit balai (1) comprenant, a) une pièce d'usure (2) conductrice électrique, b) un ressort conducteur électrique (7) servant à établir le contact électrique entre ladite pièce d'usure (2) et une sortie électrique (21) dudit porte-balai (11), et à appliquer ladite pièce d'usure (2) contre ledit collecteur en la faisant glisser dans le porte-balai (11), c) des moyens d'antiparasitage comprenant des spires conductrices électrique entourant un noyau (6) en matériau de perméabilité relative élevée, et caractérisé en ce que,
1) ledit noyau (6) et lesdites spires forment, grâce à des moyens de liaison, un bloc rigide (4), lesdites spires conductrices (5) étant rapprochées sans contact électrique entre elles,
2) ledit bloc rigide (4) est, grâce à des moyens d'assemblage, solidaire mécaniquement avec ladite pièce d'usure (2) et relié électriquement, d'une part avec ledit ressort (7), et d'autre part avec ladite pièce d'usure (2), l'ensemble dudit bloc rigide (4) et de ladite pièce d'usure (2) constituant un bloc composite rigide apte à glisser dans ledit porte-balai (11) sous l'action dudit ressort (7),
3) ledit porte-balai (11) comprend des moyens pour éviter le court-circuit entre ladite pièce d'usure (2) et ledit ressort (7).

**2 -** Ensemble selon la revendication 1 dans lequel ledit ressort conducteur électrique (7), lesdites spires conductrices (5) et lesdits moyens d'assemblage forment un même conducteur électrique spiralé (12) constitué de trois parties ayant chacune sa fonction propre (respectivement dans l'ordre : spires (7) à fonction "ressort", spires rapprochées (5) à fonction "antiparasitage", et spires jointives (8) à fonction "assemblage") en plus de la fonction commune de conduction électrique, lesdits moyens d'assemblage étant constitués par des spires jointives (8) formant un élément mâle fixable, de préférence par vissage, à un élément femelle, de préférence un trou borgne (3), de ladite pièce d'usure (2).

**3 -** Ensemble selon la revendication 2 dans lequel, lesdits moyens de liaison rigidifiant l'ensemble constitué par ledit noyau (6) et lesdites spires rapprochées (5) sont constitués par un revêtement (9) de matière plastique isolante.

**4 -** Ensemble selon la revendication 3 dans lequel ledit revêtement (9) est choisi parmi un manchon plastique (9a), un film plastique (9b), une couche de vernis (9c).

**5 -** Ensemble selon la revendication 2 dans lequel, lesdits moyens de liaison rigidifiant l'ensemble constitué par ledit noyau (6) et lesdites spires rapprochées (5) sont constitués par un noyau (6) fileté, dont le filetage coopère avec lesdites spires rapprochées (5).

**6 -** Ensemble selon une quelconque des revendications 1 à 5 dans lequel ledit matériau de perméabilité magnétique élevée formant le noyau (6) est choisi parmi les ferrites doux, l'acier, un matériau composite comprenant soit des ferrites doux, soit de l'acier, soit des ferrites doux et de l'acier, ayant une perméabilité relative supérieure à 10, de manière à élargir la plage de fréquence efficace desdits moyens d'antiparasitage.

**7 -** Ensemble selon la revendication 6 dans lequel, de manière à éviter le court-circuit entre ladite pièce d'usure (2) et ledit ressort (7), ledit porte-balai (11) est en matériau isolant électrique, ou est en métal revêtu sur tout ou partie de sa surface intérieure d'un revêtement isolant.

**8 -** Ensemble selon la revendication 6 dans lequel, de manière à éviter le court-circuit entre ladite pièce d'usure (2) et ledit ressort (7), ledit porte-balai (11) est en métal et est coupé transversalement (coupure (18)), de sorte que la partie du porte-balai dans laquelle glisse la pièce d'usure (2) est isolée électriquement de l'autre partie du porte-balai dans laquelle se trouve ledit ressort (7).

**9 -** Ensemble selon une quelconque des revendications 1 à 8 dont l'impédance Z est adaptée par modification des caractéristiques équivalentes R,L,C du balai (1) et/ou du porte-balai (11) de manière à obtenir une valeur de Z élevée, supérieure à l'impédance (Zi+Ze) du moteur dans la plage de fréquence où un effet d'antiparasitage important est recherché.

**10 -** Ensemble selon la revendication 9 dans lequel l'adaptation d'impédance Z est obtenue par modification des caractéristiques équivalentes Rb, Lb, Cb dudit bloc rigide (4), typiquement par choix adapté dudit matériau de perméabilité relative élevée formant le noyau (6) et/ou de l'inductance des dites spires rapprochées

10

(5), de manière à ce que la fréquence de résonance de l'impédance Z se situe dans le domaine de fréquence où un effet d'antiparasitage important est recherché.

**11 -** Ensemble selon une quelconque des revendications 7 à 10 dans lequel, de manière à adapter l'impédance Z, ledit porte-balai est ouvert dans le sens longitudinal (fente (19)).

**12 -** Ensemble selon une quelconque des revendications 2 à 11 dans lequel ledit conducteur électrique spiralé (12) est un conducteur composite à âme métallique à caractéristiques mécaniques élevées recouverte d'une couche métallique à conductivité électrique élevée, de préférence en cuivre ou alliage de cuivre.

**13 -** Ensemble selon la revendication 12 dans lequel ladite âme métallique est soit en acier, soit en acier inox, soit en alliage cuivre-béryllium.

**14 -** Procédé de fabrication d'un balai (1) pour ensemble (10) de balai et porte-balai selon une quelconque des revendications 1 à 13, comprenant :

a) la fabrication d'une pièce d'usure (2) munie d'un trou borgne cylindrique (3),

b) la fabrication, à partir d'un conducteur électrique, d'une pièce conductrice spiralée (12) comprenant successivement des spires non jointives formant ressort (7), des spires rapprochées (5) sans contact électrique entre elles et à valeurs d'inductance L prédéterminée, et des spires jointives (8) à enveloppe cylindrique vissables à l'intérieur du trou borgne (3),

c) l'assemblage, par vissage, de ladite pièce d'usure (2) et de ladite pièce conductrice spiralée (12), et comprenant le placement, à un stade quelconque du procédé, d'un noyau (6) en matériau de perméabilité élevée à l'intérieur desdites spires rapprochées (5) à valeur de L prédéterminée,

d) la liaison dudit noyau et desdites spires rapprochées par application d'un revêtement (9) de matière plastique isolante.

**15 -** Procédé selon la revendication 14 dans lequel ledit placement est de préférence obtenu en introduisant à force un noyau (6) en matériau de perméabilité élevée à l'intérieur desdites spires rapprochées (5).

**16 -** Procédé selon la revendication 14 dans lequel ledit revêtement (9) est, de préférence, une couche de vernis stable thermiquement (au moins jusqu'à 150°C).

**17 -** Ensemble (10) balai et porte-balai pour moteur électrique muni d'un collecteur, ledit balai (1) comprenant, a) une pièce d'usure conductrice électrique (2), b) un ressort conducteur électrique (7) servant à établir le contact électrique entre ladite pièce d'usure (2) et une sortie électrique (21) dudit porte-balai (11), et à appliquer ladite pièce d'usure contre ledit collecteur en la faisant glisser dans ledit porte-balai, caractérisé en ce que, de manière à obtenir un effet d'antiparasitage, ledit porte-balai (11) est en métal, est ouvert dans le sens longitudinal (direction "r") et comprend des moyens pour éviter le court-circuit entre ladite pièce d'usure (2) et ledit ressort (7).

**18 -** Ensemble selon la revendication 17 dans lequel lesdits moyens sont choisis parmi : l'utilisation d'un porte-balai métallique (20) recouvert intérieurement d'une couche isolante (17), l'utilisation d'un porte-balai métallique (20) coupé transversalement par un espace (18) de sorte que la partie du porte-balai (11) dans laquelle glisse la pièce d'usure (2) soit isolée électriquement de l'autre partie du porte-balai dans laquelle se trouve ledit ressort (7).

**FIG.1**

FIG. 2

FIG.3

FIG.4

FIG.5

$$Z = Re + j\omega Le$$

## FIG.6

FIG.7

FIG.8

FIG.9

**Office européen des brevets**

# RAPPORT DE RECHERCHE EUROPEENNE

Numero de la demande

EP 94 42 0357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | US-A-5 208 499 (BARBER ET AL.)<br>* colonne 1 - colonne 5, ligne 27; figures 1-4 * | 17<br>1,6,7,<br>14,15,18 | H01R39/54<br>H02K11/00<br>H02K13/10<br>H01R39/36 |
|  | --- |  |  |
| X<br>A | GB-A-933 442 (ELECTROLUX AKTIEBOLAGET)<br>* page 1, colonne 1, ligne 9 - colonne 2, ligne 40; figures 1,2 * | 17<br>1,6,7,<br>14,15,18 |  |
|  | --- |  |  |
| A | FR-A-462 384 (LE CARBONNE SOCIÉTÉ ANONYME)<br><br>* page 1 - page 2, colonne 1, ligne 19; figures 21-3 * | 2,3,5,<br>12,14 |  |
|  | --- |  |  |
| D,A | FR-A-2 504 742 (VOGT GMBH & CO. KG)<br><br>* page 1 - page 2; figures 1-3 * | 1,6,14,<br>15,17 |  |
|  | --- |  |  |
| D,A | FR-A-2 401 541 (BOSCH-SIEMENS HAUSGERÄTE GMBH)<br>* page 1 - page 3; figure 1 * | 1,6,14,<br>15,17 |  |
|  | ----- |  | **DOMAINES TECHNIQUES RECHERCHES (Int.Cl.6)**<br><br>H01R<br>H02K |

Le présent rapport a été établi pour toutes les revendications

| Lieu de la recherche | Date d'achèvement de la recherche | Examinateur |
|---|---|---|
| LA HAYE | 9 Mars 1995 | Tappeiner, R |